# DEMANDE DE BREVET EUROPEEN

(11) **EP 3 939 431 A1**
(43) Date de publication de la demande: **19.01.2022**
(21) Numéro de dépôt: 21184522.7
(22) Date de dépôt: 08.07.2021
(51) Int. Cl.: A01N 37/02, A01N 47/36, A01N 47/38, A01P 13/00

(54) **COMPOSITION HERBICIDE**

(30) Priorité: 15.07.2020 FR 2007402
(71) Demandeur: Evergreen Garden Care France SAS, 69760 Limonest (FR)
(72) Inventeur: JOUANET, Matthieu, 69380 Lozanne (FR); MARTEL, Laurent, 69300 Caluire et Cuire (FR)
(74) Mandataire: Cabinet Laurent & Charras

(57) **Abrégé**

La présente invention concerne une composition herbicide comprenant :
- un composant (A) comprenant au moins un inhibiteur de l'acétolactate synthase (ALS), ledit inhibiteur de l'ALS comprenant du flazasulfuron,
- un composant (B) comprenant au moins un acide carboxylique dont la chaîne carbonée comprend de 1 à 3 atomes de carbone, ledit acide carboxylique comprenant de l'acide acétique.

## Description

### Domaine technique de l'invention

La présente invention se rapporte au domaine technique des compositions herbicides utilisables dans des zones cultivées telles que des zones de cultures fruitières, légumières ou ornementales ou dans des zones non cultivées telles que des zones industrielles ou résidentielles.

### Arrière-plan technologique

Dans le domaine des produits herbicides, il est connu depuis quelques années d'utiliser des compositions comprenant un ou plusieurs inhibiteurs de l'enzyme acétolactate synthase (acronyme ALS), dits inhibiteurs de l'ALS, pour le désherbage sélectif des cultures agricole.

L'enzyme acétolactate synthase est responsable de la biosynthèse des acides aminés ramifiés au sein des végétaux, tels que la L-valine, la L-leucine, et la L-isoleucine.

En inhibant l'acétolactate synthase, ces molécules ont une action systémique, c'est-à-dire une action sur le processus biologique qui sous-tend au développement de la plante, ce qui aboutit à une dégradation puis à la destruction de la structure biologique de la plante.

Les documents suivants décrivent des compositions herbicides contenant de tels inhibiteurs de l'ALS.

Le document WO 2008/142391 décrit une composition herbicide comprenant un mélange d'herbicides, à savoir un inhibiteur de l'ALS, par exemple le flazasulfuron et un inhibiteur de l'enzyme p-hydroxyphényl pyruvate dioxygénase (acronyme HPPD), en combinaison avec un acide gras saturé ou insaturé.

Le document WO 2015004087 décrit une composition herbicide comprenant un inhibiteur de l'ALS, tel que par exemple le flazasulfuron et de l'acide pélargonique.

Cependant, dans le cas d'une utilisation d'une pluralité de composés actifs, il existe fréquemment des phénomènes d'incompatibilité chimique, physique ou biologique; Il peut s'agir par exemple d'un manque de stabilité de la composition chimique obtenue, de la dégradation d'un composé actif par un autre ou d'un antagonisme de l'activité biologique des composés actifs de la composition.

En d'autres termes, l'activité herbicide d'un composé actif herbicide, notamment d'un inhibiteur de l'ALS ou celle d'un acide herbicide, peut être fortement réduite en fonction de l'effet provoqué par leur interaction, ainsi que par la flore adventice visée par le traitement.

Dans le cas de la composition herbicide décrite dans le document WO 2008/142391 précédent, des interactions potentielles entre l'inhibiteur de l'ALS et l'inhibiteur de HPPD peuvent fortement réduire l'efficacité de la composition herbicide.

De manière similaire, dans le cas de la composition herbicide décrite dans le document WO 2015004087 précédent, des interactions potentielles entre l'inhibiteur de l'ALS et l'acide pélargonique peuvent fortement réduire l'efficacité de la composition herbicide.

### Description de l'invention

Un but de l'invention est de proposer une nouvelle composition herbicide à base d'un ou plusieurs inhibiteur(s) de l'ALS permettant de surmonter les inconvénients mentionnés précédemment.

L'invention vise tout particulièrement à fournir une composition herbicide permettant de limiter, voire d'empêcher les interactions entre le ou les inhibiteurs de l'ALS qu'elle contient, et les autres constituants de la composition, et ainsi de maximiser le pouvoir herbicide de la composition.

L'invention vise en outre à proposer une composition herbicide dont les coûts de production sont similaires ou inférieurs à ceux d'autres compositions connues.

À cette fin, l'invention propose une composition herbicide comprenant :
- un composant (A) comprenant au moins un inhibiteur de l'acétolactate synthase (ALS), ledit inhibiteur de l'ALS comprenant du flazasulfuron,
- un composant (B) comprenant au moins un acide carboxylique, ledit acide carboxylique comprenant de l'acide acétique.

Le Demandeur a découvert que l'acide éthanoïque (acide acétique) n'empêche ni ne réduit l'action systémique du flazasulfuron sur les végétaux. En conséquence, l'efficacité du flazasulfuron est optimale, conduisant ainsi à une efficacité de la composition herbicide supérieure à celle observée pour le flazasulfuron seul ou pour l'acide acétique seul, ce qui démontre un effet de synergie et d'additivité entre le flazasulfuron et l'acide acétique. Par ailleurs, la composition de l'invention présente une efficacité herbicide au moins équivalente aux compositions de l'état de l'art, et se présente ainsi comme une alternative efficace et à coûts similaires ou inférieurs à ces dernières.

L'efficacité herbicide de la composition de l'invention provient notamment du fait que :
- d'une part le flazasulfuron, en tant qu'inhibiteur de l'ALS, agit de manière systémique sur la plante (l'action de cette substance est à la fois foliaire et racinaire), et
- d'autre part l'acide acétique agit par contact en brûlant la structure externe du végétal, induisant ainsi une nécrose du tissu végétal. Comme indiqué précédemment, le Demandeur s'est aperçu que l'action par contact de l'acide acétique est obtenue sans diminuer l'action systémique du flazasulfuron.

On entend par « composition herbicide », une composition chimique comprenant au moins un composant présentant des propriétés herbicides aptes à dégrader la structure interne et/ou externe d'un végétal lorsque la composition est mise au contact dudit végétal. Dans la présente invention, au vu des paragraphes précédents, le flazasulfuron (et plus généralement les inhibiteurs de l'ALS) et l'acide acétique sont tous deux des composants présentant des propriétés herbicides au sens de l'invention, et peuvent être désignés en tant qu'actifs herbicides.

Le flazasulfuron permet d'obtenir une très bonne efficacité herbicide sur le long terme avec une inhibition des repousses de plantes adventices, de par son action racinaire et potentiellement anti-germinative.

Selon un mode de réalisation préféré, la composition comprend, en plus du flazasulfuron, un ou plusieurs inhibiteurs de l'ALS appartenant à la famille des sulfonylurées en tant que composant (A), de par la présence dans leur formule chimique d'une ou plusieurs fonctions sulfonylurée.

Selon ce mode de réalisation, la composition comprend de préférence un ou plusieurs des inhibiteurs de l'ALS suivants : mésosulfuron méthyle, iodosulfuron, rimsulfuron, nicosulfuron, amidosulfuron, éthoxysulfuron, thiencarbazone méthyle, et leurs mélanges. Ces composés chimiques appartiennent tous à la famille des sulfonylurées.

L'acide acétique offre l'avantage de détruire la végétation présentant une structure peu résistante, notamment les mauvaises herbes jeunes, quelle que soit leur famille biologique, monocotylédones ou dicotylédones. De plus, l'acide acétique est un produit peu cher que l'on peut se procurer facilement, ce qui rend la préparation de la composition peu coûteuse.

La composition peut comprendre un ou plusieurs acides en plus de l'acide acétique, en tant que composant (B). Lorsqu'ils sont présents, ces acides sont préférablement l'acide méthanoïque et l'acide propanoïque.

La composition peut comprendre un ou plusieurs autres acides, notamment des acides carboxyliques à plus longue chaine, et leurs mélanges.

De préférence, la composition selon l'invention ne comprend pas d'acide pélargonique, d'acide caprylique, et/ou d'acide caprique.

La combinaison de ces deux matières actives offre à la fois l'action foliaire rapide de l'acide acétique et l'action durable du flazasulfuron, sur tout type de plante.

De préférence, le ratio massique entre l'acide carboxylique et l'inhibiteur de l'ALS est compris entre 1:1 et 1:24000, de préférence entre 1:200 et 1:12000, et de manière davantage préférée entre 1:1000 et 1:1500. Un ratio en dehors des bornes 1:1 et 1:24000 rendrait inopérante une des deux matières actives. Le ratio compris entre 1:1000 et 1:1500 montre tout particulièrement d'excellents résultats en termes d'efficacité herbicide.

De préférence, la composition selon l'invention comprend uniquement du flazasulfuron en tant qu'inhibiteur de l'ALS (l'inhibiteur de l'ALS est constitué de flazasulfuron) et de l'acide acétique en tant qu'acide (l'acide, en particulier l'acide carboxylique, est constitué d'acide acétique).

Dans ce cas, les ratios précédents s'appliquent uniquement au flazasulfuron et à l'acide acétique. De préférence, le ratio massique entre l'acide acétique et le flazasulfuron est compris entre 1:200 et 1:12000, de préférence entre 1:1000 et 1:1500.

De préférence, la composition selon l'invention comprend uniquement du flazasulfuron et de l'acide acétique en tant qu'actifs herbicides. En d'autres termes, ladite composition peut comprendre d'autres constituants, mais ces derniers ne sont pas des actifs herbicides.

La composition chimique décrite précédemment se présente typiquement sous la forme d'un produit concentré, ou plus simplement un « concentré ». Ce concentré est destiné à être dilué avec un milieu diluant comprenant préférablement des adjuvants pour améliorer les modalités d'application de la composition et le traitement herbicide, avant de l'appliquer sur la végétation à traiter.

Après ajout du milieu diluant, la composition comprend alors :
- un composant (A) comprenant au moins un inhibiteur de l'ALS, ledit inhibiteur de l'ALS comprenant du flazasulfuron,
- un composant (B) comprenant au moins un acide carboxylique, ledit acide carboxylique comprenant de l'acide acétique,
- un milieu diluant.

Le composant (A) et le composant (B) sont tels que décrits précédemment.

Selon le moment où est réalisée la dilution, la composition se présente sous deux formulations différentes.

La première formulation correspond à une formulation « concentrée » dans laquelle le concentré comprenant les composants (A) et (B), préalablement stocké et conservé, est dilué avec le milieu diluant juste avant de traiter la végétation, afin d'obtenir la composition prête à être appliquée sur la végétation.

La deuxième formulation correspond à une formulation « prête à l'emploi », ou « Ready To Use » en anglais (acronyme RTU). La dilution du concentré comprenant les composants (A) et (B) est réalisée en amont du traitement herbicide, de sorte que l'utilisateur n'a plus qu'à traiter la végétation sans avoir besoin de réaliser le mélange : le produit que met en œuvre l'utilisateur ne nécessite pas de dilution préalable à son utilisation. Selon cette deuxième formulation, la composition est d'abord préparée par dilution du concentré avec le milieu diluant, puis stocké dans un récipient adapté à cet effet pendant un temps déterminé, par exemple un bidon destiné à la vente. Lorsqu'il souhaite traiter la végétation à éliminer, l'utilisateur peut donc directement utiliser ce mélange RTU.

Bien évidemment, la dilution de la composition herbicide par le milieu diluant est ajustée notamment selon la surface de végétation à traiter, de sorte à obtenir les concentrations souhaitées en inhibiteur de l'ALS et en acide carboxylique.

Le milieu diluant est de préférence une phase aqueuse.

Le milieu diluant peut comprendre un ou plusieurs acides en plus de l'acide acétique. Lorsqu'ils sont présents, ces acides sont préférablement des acides carboxyliques.

De préférence, la composition après dilution ne comprend pas d'acide pélargonique, d'acide caprylique, et/ou d'acide caprique.

De préférence, la composition après dilution comprend uniquement du flazasulfuron en tant qu'inhibiteur de l'ALS et de l'acide acétique en tant qu'acide.

De préférence, la composition après dilution comprend uniquement du flazasulfuron et de l'acide acétique en tant qu'actifs herbicides. En d'autres termes, ladite composition peut comprendre d'autres constituants, mais ces derniers ne sont pas des actifs herbicides.

Le milieu diluant comprend optionnellement des adjuvants. Les adjuvants sont de préférence choisis parmi : les tensioactifs, les agents mouillants, les agents dispersants, les émulsifiants, les épaississants, les conservateurs, et leurs mélanges.

Les tensioactifs regroupent plusieurs catégories d'additifs, comme les agents mouillants, dispersants et émulsifiants, et dont le rôle principal est d'assurer la stabilité physique d'une formulation qui présente au moins deux phases non miscibles. Un tensioactif est une molécule qui présente une partie hydrophile (affinité pour l'eau et solvants polaires) et une partie hydrophobe (affinité pour l'huile et solvants apolaires).

Un agent mouillant est spécifique à une formulation d'un solide dispersé dans un liquide, dans lequel il est insoluble. L'agent mouillant permet de réduire la tension superficielle de l'eau et ainsi de faciliter l'incorporation et le mélange de particules solides dans une formulation liquide. Un agent mouillant peut permettre un meilleur étalement de la formulation sur une surface solide, comme sur la feuille d'une plante par exemple.

Un agent dispersant vient généralement en combinaison avec un agent mouillant. L'agent dispersant assure la pérennité et la stabilité de la suspension de particules, obtenue via l'agent mouillant, dans le temps.

Un agent émulsifiant est spécifique à une formulation liquide/liquide et facilite la formation d'une émulsion entre deux liquides non miscibles, sous la forme de petites gouttelettes. L'agent émulsifiant vient former un film autour de ces gouttelettes qui permet de les stabiliser dans le temps, et d'éviter un phénomène de coalescence.

Un épaississant est un additif qui permet d'augmenter la viscosité globale de la formulation afin de venir renforcer la stabilité physique déjà assurée en partie par les tensioactifs. L'épaississant est généralement ajouté à la fin du processus de formulation.

Un conservateur permet d'empêcher la prolifération de micro-organismes et bactéries dans les formulations, notamment celles qui contiennent de l'eau et qui sont donc plus vulnérables aux contaminations pouvant avoir lieu durant la fabrication, le transport, le stockage ou l'utilisation par le consommateur. Cet additif est généralement ajouté à la fin du processus de formulation.

L'invention se rapporte également à un kit comprenant au moins deux composants séparés physiquement à utiliser comme composition herbicide, comprenant :
- un composant (A) comprenant au moins un inhibiteur de l'acétolactate synthase (ALS), ledit inhibiteur de l'ALS comprenant du flazasulfuron,
- un composant (B) comprenant au moins un acide carboxylique, ledit acide carboxylique comprenant de l'acide acétique,
les composants (A) et (B) étant destinés à un usage simultané, séparé, ou séquentiel.

Selon un mode de réalisation, le composant (A) comprend une phase huileuse comprenant au moins ledit inhibiteur de l'ALS comprenant du flazasulfuron, et le composant (B) comprend une solution aqueuse dudit acide carboxylique comprenant de l'acide acétique.

De préférence, les composants (A) et (B) sont tels que décrits précédemment en rapport avec la composition herbicide.

Les composants (A) et (B) du kit sont séparés physiquement, c'est-à-dire isolés l'un de l'autre. Les composants (A) et (B) du kit sont destinés à être mis en contact l'un de l'autre juste avant de traiter la végétation, afin d'obtenir une composition herbicide qui est ensuite appliquée sur la végétation. Le fait de séparer le composant (A) du composant (B) avant utilisation de la composition permet d'éviter toute interaction physico-chimique entre l'inhibiteur de l'ALS et l'acide carboxylique, évitant ainsi toute dégradation éventuelle de ces composés chimiques.

Selon un mode de réalisation préféré, le composant (A) comprend du flazasulfuron sous forme de granulés dispersés dans un liquide non aqueux, de préférence un liquide huileux ; et le composant (B) comprend une solution d'acide acétique dans de l'eau. Le fait de séparer le flazasulfuron du milieu aqueux avant utilisation de la composition permet de préserver l'intégrité du flazasulfuron, ce dernier étant en effet instable en milieu aqueux.

Optionnellement, une fois les composants (A) et (B) mélangés, la composition obtenue peut être diluée avec un milieu diluant.

De préférence, le milieu diluant est tel que décrit précédemment en référence à la composition selon l'invention.

L'invention se rapporte également à un procédé de préparation d'une composition herbicide telle que décrite précédemment. Le procédé comprend les étapes de fourniture du composant (A) comprenant au moins ledit inhibiteur de l'ALS, et d'un composant (B) comprenant au moins ledit acide carboxylique, et de mélange des composants (A) et (B) pour obtenir la composition herbicide.

Un autre objet de l'invention est l'utilisation d'une composition herbicide telle que décrite précédemment, en tant qu'herbicide pour le traitement de végétaux.

### Description des figures

D'autres avantages et caractéristiques de l'invention apparaîtront à la lecture de la description suivante donnée à titre d'exemple illustratif et non limitatif, en référence aux figures annexées suivantes :
La figure 1 est un graphique qui représente l'efficacité dans le temps, sur un essai, de différents mélanges herbicides référencés de 1 à 10, pour le traitement de l'espèce végétale *Matricaria chamomilla* ;
La figure 2 est un graphique qui représente l'efficacité dans le temps, sur un essai, de différents mélanges herbicides référencés de 1 à 10, pour le traitement de l'espèce végétale *Taraxacum officinale ;*
La figure 3 est un graphique qui représente l'efficacité dans le temps, sur un essai, de différents mélanges herbicides référencés de 1 à 10, pour le traitement de l'espèce végétale *Senecio vulgaris ;*
La figure 4 est un graphique qui représente l'efficacité dans le temps, sur un essai, de différents mélanges herbicides référencés de 1 à 10, pour le traitement de l'espèce végétale *Plantago lanceolata ;*
La figure 5 est un graphique qui représente l'efficacité dans le temps, sur un essai, de différents mélanges herbicides référencés de 1 à 10, pour le traitement de l'espèce végétale *Geranium dissectum ;*
La figure 6 est un graphique qui représente l'efficacité dans le temps, sur un essai, de différents mélanges herbicides référencés de 1 à 10, pour le traitement de l'espèce végétale *Amaranthus retroflexus ;*
La figure 7 est un graphique qui représente l'efficacité dans le temps, sur un essai, de différents mélanges herbicides référencés de 1 à 10, pour le traitement de l'espèce végétale *Echinochloa crus-galli ;*
La figure 8 est un graphique qui représente l'efficacité dans le temps, sur un essai, de différents mélanges herbicides référencés de 1 à 10, pour le traitement de l'espèce végétale *Lolium perenne ;*
La figure 9 est un graphique qui représente l'efficacité moyenne dans le temps, sur un essai, des mélanges herbicides 1 à 10, calculée à partir des valeurs d'efficacité des traitements correspondants aux graphiques des figures 1 à 8 ;

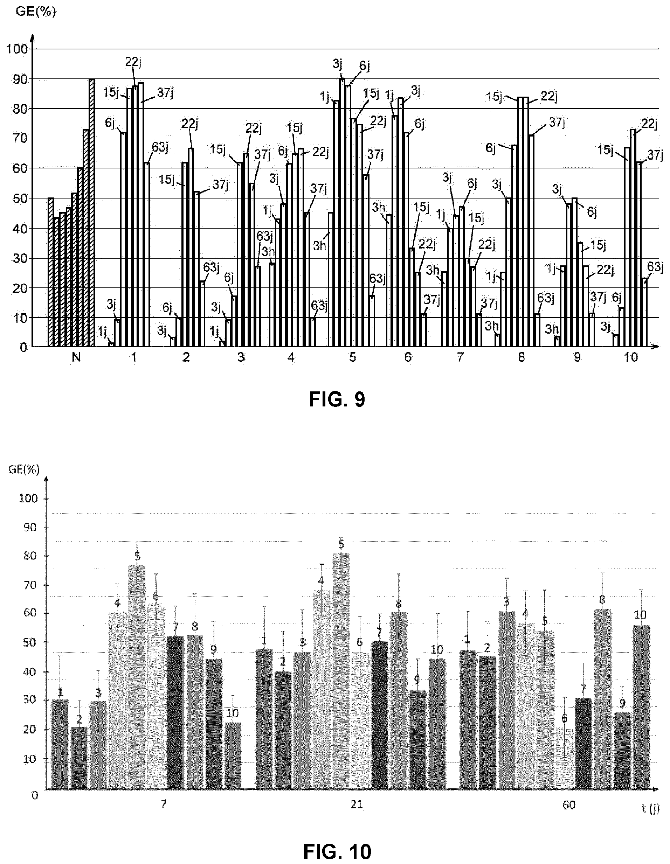

La figure 10 est un graphique qui représente l'efficacité dans le temps, sur une moyenne de 6 essais, de différents mélanges herbicides référencés de 1 à 10. Les adventices présentes sur ces 6 essais sont : *Matricaria chamomilla, Taraxacum officinale, Senecio vulgaris, Plantago lanceolata, Geranium dissectum, Amaranthus retroflexus, Echinochloa crus-galli, Lolium perenne, Chenopodium album, Capsella bursa-pastoris, Spergula sp., Veronica persica, Galinsoga quadriradiata, Poa annua, Lamium amplexicaule, Arrhenatherum elatius, Lotus corniculatus, Potentilla reptans, Rubus fruticosus, Lolium multiflorum, Rumex acetosa, Stellaria media, Festuca ovina, Ranunculus arvensis, Galium album, Dactylis glomerata, Trifolium arvense, Gramineae, Convolvulus arvensis, Sonchus arvensis ;*
La figure 11 est un graphique qui représente l'efficacité dans le temps, sur un essai, de différents ratios entre les composants A et B, toutes plantes confondues. Les adventices présentes sur cet essai sont *Taraxacum officinale, Plantago Major, Amaranthus retroflexus, Echinochloa crus-galli, Lolium perenne, Veronica persica, Solanum nigium ;*
La figure 12 est un graphique qui représente l'efficacité dans le temps, sur un essai, de différents ratios entre les composants A et B, toutes plantes confondues. Les adventices présentes sur cet essai sont : *Chenopodium album, Spergula arvensis, Polygonum aviculare.*

### Exemples de réalisation de l'invention

Plusieurs mélanges herbicides ont été préparés puis appliqués sous la forme d'un spray de microgouttelettes sur différentes espèces de végétaux.

Pour ce faire, on prépare d'abord les compositions concentrées comprenant chacune au moins une substance active aux propriétés herbicides. On mélange chacune de ces compositions à une phase aqueuse comprenant éventuellement des adjuvants, afin d'obtenir les compositions numérotées de 1 à 10 dans le tableau 1 suivant.

Le tableau 1 indique la nature des substances actives présentes dans les différentes compositions herbicides utilisées dans les essais dont les résultats sont présentés en annexe, ainsi que la quantité de substance active appliquée par hectare et la quantité de composition (ou bouillie) appliquée par hectare. L'exemple N correspond à une absence de traitement herbicide.

**Tableau 1 : Compositions herbicides utilisées pour le traitement des végétaux**

| **Composition herbicide** | **Substance active** | **Concentrations massiques** | **Quantité de substance active par hectare** | **Quantité de composition herbicide par hectare** |
|---|---|---|---|---|
| **N** | - | - | - | - |
| **1** | Glyphosate | 125 g/L | 1130 g | 500 L/ha |
| | Diflufénicanil (DFF) | 20 g/L | 180 g | |
| **2** | Flazasulfuron | 250 g/kg = 25% | 50 g | 500 L/ha |
| **3** | Flazasulfuron | 250 g/kg = 25% | 50 g | 500 L/ha |
| | Fluroxypyr | 200 g/L | 200 g | |
| 4 | Flazasulfuron | 250 g/kg = 25% | 50 g | 500 L/ha |
| | Acide pélargonique | 565 g/L | 13000 g | |
| **5** | Flazasulfuron | 250 g/kg = 25% | 50 g | 1000 L/ha |
| | Acide acétique | 60 g/L | 60 000 g | |
| **6** | Acide acétique | 60 g/L | 60 000 g | 1000 L/ha |
| **7** | Acide pélargonique | 565 g/L | 13 000 g | 500 L/ha |
| | Dicamba | 480 g/L | 480 g | |
| | Fluazifop-p-butyl | 125 g/L | 373 g | |
| **8** | Flazasulfuron | 250 g/kg = 25% | 50 g | 500 L/ha |
| | Carfentrazone | 60 g/L | 60 g | |
| **9** | Carfentrazone | 60 g/L | 60 g | 500 L/ha |
| **10** | Flazasulfuron | 250 g/kg = 25% | 50 g | 500 L/ha |
| | Fluazifop-p-butyl | 125 g/L | 375 g | |

Les concentrations massiques indiquées dans le tableau 1 pour l'acide acétique et l'acide pélargonique sont les doses maximales permettant de maximiser l'efficacité tout en minimisant les risques pour la santé de l'utilisateur et l'environnement.

La composition 5 comprenant du flazasulfuron en combinaison avec de l'acide acétique est conforme à la présente invention.

Certains des autres mélanges 1 à 4 et 6 à 10 correspondent à des compositions connues de l'état de la technique.

Chacune des compositions 1 à 10 a été appliquée sur les espèces végétales suivantes :
*Matricaria chamomilla, Taraxacum officinale, Senecio vulgaris, Plantago lanceolata, Geranium dissectum, Amaranthus retroflexus, Echinochloa crus-galli, Lolium perenne, Chenopodium album, Capsella bursa-pastoris, Spergula sp., Veronica persica, Galinsoga quadriradiata, Poa annua, Lamium amplexicaule, Arrhenatherum elatius, Lotus corniculatus, Potentilla reptans, Rubus fruticosus, Lolium multiflorum, Rumex acetosa, Stellaria media, Festuca ovina, Ranunculus arvensis, Galium album, Dactylis glomerata, Trifolium arvense, Gramineae, Convolvulus arvensis, Sonchus arvensis.*

Ces différentes plantes étaient réparties sur les 6 essais dont les efficacités moyennes sont présentées sur la figure 10.

L'efficacité des compositions herbicides 1 à 10 sur chacune des espèces végétales ci-dessus a été mesurée selon les recommandations des méthodes officielles utilisées pour l'évaluation de l'efficacité des herbicides en Europe (Méthodes dites EPPO et CEB). L'efficacité d'un produit est estimée en mesurant la surface au sol couverte par des plantes adventices en comparaison à une parcelle non traitée. Des comptages peuvent également être effectués. La formule d'Abott permet d'obtenir une valeur d'efficacité à partir de l'infestation dans la parcelle traitée et l'infestation dans la parcelle témoin : Efficacité = 100 x (témoin - traité) / témoin.

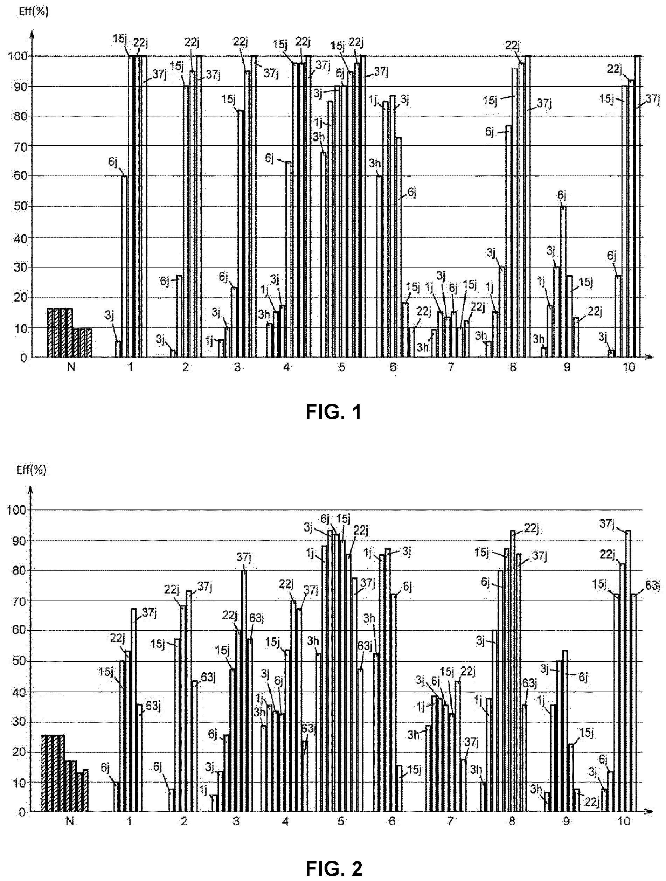

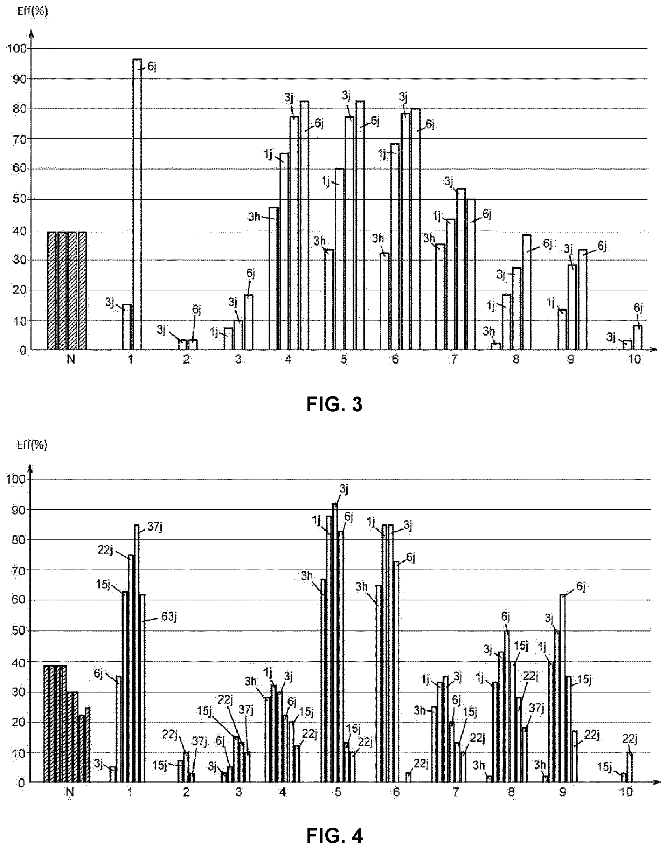

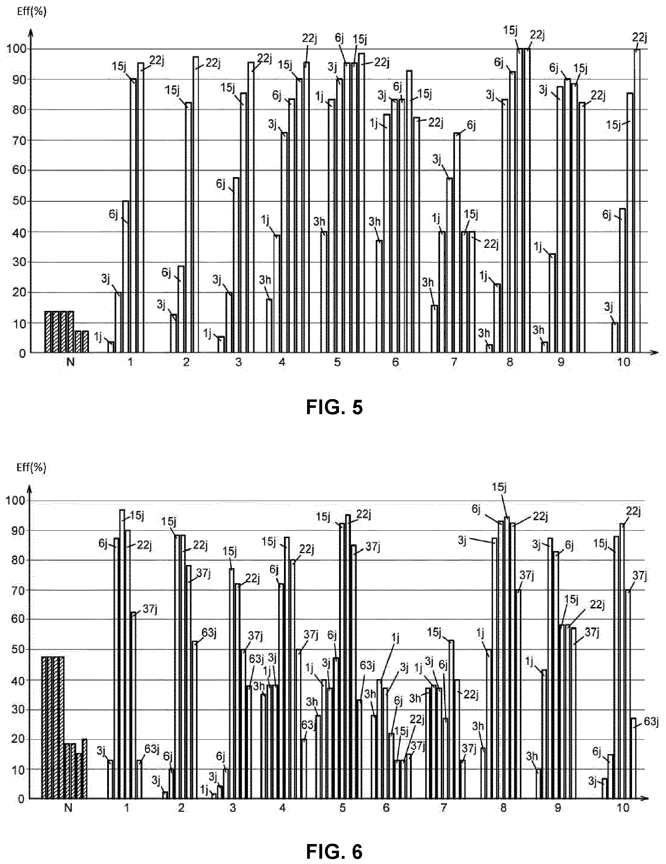

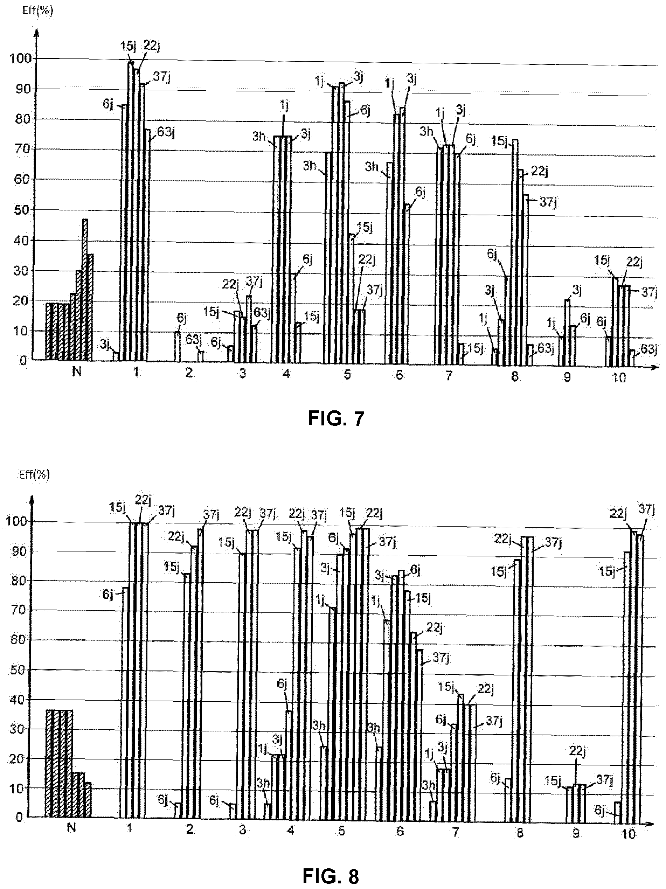

Les résultats sur l'efficacité obtenus ont été représentés, pour l'un des essais pris en exemple, sous forme de graphiques sur les figures 1 à 8 illustrant l'efficacité (notée Eff (%) pour pourcentage d'efficacité sur l'espèce ciblée) du traitement (en ordonnée) en fonction de la composition utilisée. Les figures 9 et 10 représentent des efficacités globales, notées GE (%), c'est-à-dire des efficacités toutes plantes confondues. L'observation est répétée plusieurs fois au cours du temps afin de constater l'évolution de l'efficacité, qui correspond à la persistance du produit, en heures et en jours après le traitement, et ce, pour chaque espèce végétale traitée dans cet essai.

Pour chacune des compositions 1 à 10, on a calculé la moyenne des valeurs d'efficacité obtenues avec l'ensemble des espèces végétales présentes, et illustré les résultats sous forme du graphique de la figure 9. Ces moyennes sont également regroupées dans le tableau 2 suivant, en fonction du temps écoulé après le traitement.

**Tableau 2 : Moyennes des valeurs d'efficacité des différents mélanges herbicides dans l'essai cité en exemple**

| **Mélange herbicide** | **3h** | **1j** | **3j** | **6j** | **15j** | **22j** | **37j** | **63j** |
|---|---|---|---|---|---|---|---|---|
| **N** | 50 | 43,3 | 45 | 46,7 | 51,7 | 60 | 73,3 | 90 |
| **1** | - | 1 | 9 | 72 | **87** | **88** | **89** | 62 |
| **2** | - | 0 | 3 | 10 | 62 | 67 | 52 | 22 |
| **3** | - | 2 | 9 | 17 | 62 | 65 | 55 | 27 |
| **4** | 28 | 43 | 48 | 62 | 65 | 67 | 45 | 10 |
| **5** | 45 | 83 | **90** | **88** | 77 | 75 | 58 | 17 |
| **6** | 44 | 78 | 84 | 72 | 33 | 25 | 11 | 0 |
| **7** | 25 | 40 | 44 | 47 | 30 | 27 | 11 | 0 |
| **8** | 4 | 25 | 50 | 68 | 84 | 84 | 71 | 11 |
| **9** | 3 | 27 | 48 | 50 | 35 | 27 | 11 | 0 |
| **10** | - | 0 | 4 | 13 | 67 | 73 | 62 | 23 |

Dans le tableau 2, les valeurs en gras et soulignées sont les valeurs supérieures ou égales à 85%, c'est-à-dire pour lesquelles le traitement correspondant a permis d'éliminer au moins 85% des végétaux traités.

D'après le tableau 2 et le graphique de la figure 9, on remarque que la composition 5 comprenant du flazasulfuron en tant qu'inhibiteur de l'ALS et de l'acide acétique en tant qu'acide carboxylique, est très efficace, puisqu'il permet d'atteindre une efficacité de 90% au bout de 3 jours.

L'efficacité de la composition 5 est comparable à celle de la composition 1 comprenant du glyphosate et du Diflufénicanil (DFF), mais la composition 5 présente le double avantage d'être efficace beaucoup plus rapidement (efficacité maximale en 3 jours au lieu de 15 jours pour la composition 1), et de ne pas utiliser de glyphosate, qui est connu par l'état de l'art pour être l'herbicide non sélectif de référence, tant dans le domaine agricole que celui du jardin amateur.

Le graphique de la figure 10 présente la moyenne des résultats obtenus dans les 6 essais cités en exemple, sous une forme légèrement différente, puisqu'en ordonnée figure toujours l'efficacité notée GE(%), mais en abscisse figure maintenant le temps t, exprimé en jours j, écoulé à compter du traitement. Pour chaque valeur de temps en abscisse, l'efficacité de toutes les compositions 1 à 10 est représentée. Chaque barre représente, pour une composition donnée, la moyenne des valeurs d'efficacité obtenues sur l'ensemble des espèces végétales présentes dans les essais, au bout de 7 jours, 21 jours, et 60 jours.

On remarque que la composition 5 (flazasulfuron et acide acétique) est le plus efficace pour les périodes de temps de 7 jours et 21 jours. En d'autres termes, la composition 5 garantit la meilleure efficacité herbicide pendant 21 jours, comparativement aux autres compositions, notamment par rapport :
- à la composition 1 (glyphosate et DFF) qui n'est efficace qu'à 32% au bout de 7 jours et 50% au bout de 21 jours,
- à la composition 2 (flazasulfuron seul) qui n'est efficace qu'à 22% au bout de 7 jours et 42 % au bout de 21 jours,
- à la composition 6 (acide acétique seul) qui n'est efficace qu'à 67% au bout de 7 jours et 50 % au bout de 21 jours.

De plus, la composition 5 reste efficace au bout de 60 jours avec une efficacité encore élevée de 58%.

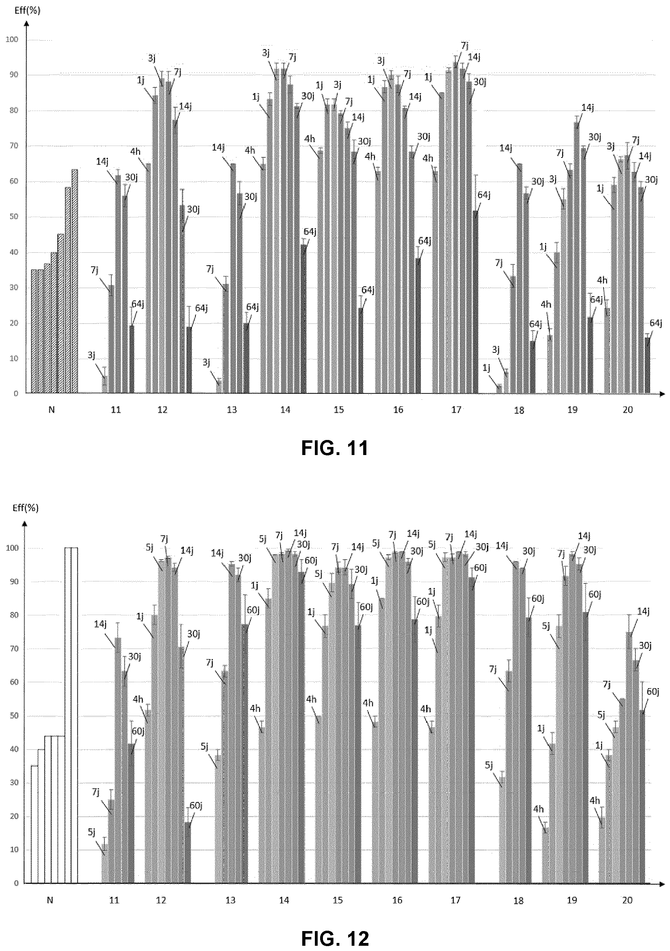

Deux essais complémentaires présentés sur les figures 11 et 12 ont été réalisés afin de démontrer les ratios les plus efficaces entre les composants A (flazasulfuron) et B (acide acétique).

Les méthodes d'application des produits et de notation de l'efficacité sont identiques aux essais précédemment décrits. Dans ces deux essais, les mélanges appliqués sont listés dans le tableau 3.

**Tableau 3 : Compositions des mélanges herbicides et ratios utilisées pour le traitement des végétaux**

| **Composition herbicide** | **Substance active** | **Dose appliquée** | **Concentration en substance active** | **Dose de substance active par hectare** | **Volume d'eau** | **Ratio (A:B)** |
|---|---|---|---|---|---|---|
| **N** | - | - | - | - | - | - |
| **11** | Flazasulfuron | 0.2 kg/ha | 25% | 50 g | 500 L/ha | 1:0 |
| **12** | Acide acétique | 1000 L/ha | 60 g/L | 60000 g | 1000 L/ha | 0:1 |
| **13** | Flazasulfuron | 0.2 kg/ha | 25% | 50 g | 1000 L/ha | 1:200 |
| | Acide acétique | 167 L/ha | 60 g/L | 10000 g | | |
| **14** | Flazasulfuron | 0.2 kg/ha | 25% | 50 g | 1000 L/ha | 1:1200 |
| | Acide acétique | 1000 L/ha | 60 g/L | 60000 g | | |
| **15** | Flazasulfuron | 0.2 kg/ha | 25% | 50 g | 1000 L/ha | 1:2800 |
| | Acide acétique | 1000 L/ha | 14% | 140000 | | |
| **16** | Flazasulfuron | 0.02 kg/ha | 25% | 5 g | 1000 L/ha | 1:12000 |
| | Acide acétique | 1000 L/ha | 60 g/L | 60000 g | | |
| **17** | Flazasulfuron | 0.4 kg/ha | 25% | 100 g | 1000 L/ha | 1:600 |
| | Acide acétique | 1000 L/ha | 60 g/L | 60000 g | | |
| **18** | Flazasulfuron | 0.2 kg/ha | 25% | 50 g | 500 L/ha | 1:200 |
| | Acide acétique | 167 L/ha | 60 g/L | 10000 g | | |
| **19** | Flazasulfuron | 0.2 kg/ha | 25% | 50 g | 500 L/ha | 1:600 |
| | Acide acétique | 500 L/ha | 60 g/L | 30000 g | | |
| **20** | Flazasulfuron | 0.2 kg/ha | 25% | 50 g | 500 L/ha | 1:1400 |
| | Acide acétique | 500 L/ha | 14% | 70000 g | | |

Les valeurs d'efficacité des compositions appliquées montrent dans les deux essais (figures 11 et 12) que lesdites compositions offrent systématiquement une meilleure efficacité que l'utilisation d'un composant seul, à savoir le flazasulfuron seul ou l'acide acétique seul, et ce, pour tous les ratios A : B testés.

Ces essais permettent également de prouver qu'il existe une synergie entre les composants A (flazasulfuron) et B (acide acétique) lorsqu'ils sont utilisés ensemble conformément à l'invention. Il est connu de l'état de l'art, et les essais présentés précédemment l'ont également démontré, que l'acide acétique présente une action rapide mais très limitée dans le temps sur le contrôle des plantes, notamment des plantes adventices (appelées couramment « mauvaises herbes »). À contrario, l'effet du flazasulfuron est très lent et n'apparait qu'après plusieurs semaines. Or les données présentées dans le tableau 4 montrent un effet synergique inattendu dans les situations où l'acide acétique n'est plus censé produire d'effet alors que l'efficacité du mélange n'a pas atteint 100%. Ce type de situation apparait généralement à partir de 30 jours, et on peut alors observer une efficacité du mélange supérieure à ce qui est attendu.

Cette synergie apparait de manière encore plus prononcée sur des plantes connues de l'état de l'art comme étant peu sensibles au flazasulfuron, comme par exemple *Veronica persica* (VERPE) ou *Solanum nigrum* (SOLNI). Sur ces plantes, on observe ainsi une efficacité dans la durée bien supérieure à celle du flazasulfuron seul alors que l'acide acétique n'agit pas dans la durée.

**Tableau 4 : Synergies observées avec le mélange A+B dans un ratio 1 :1200**

| **Délai après application** | **Essai** | **Code de la plante cible** | **Efficacité observée** | | | **Efficacité attendue** | | **Effet observé** | **Effet synergique observé (%)** |
|---|---|---|---|---|---|---|---|---|---|
| | | | **A seul** | **B seul** | **A+B ratio 1:1200** | **Mini mum** | **Maxi mum** | | |
| 30 jours | France | PLAMA | 3,3 | 13,3 | 33,3 | 13,3 | 16,6 | Synergie | **+16,7** |
| 30 jours | France | VERPE | 0 | 10 | 61,7 | 10 | 10 | Synergie | **+51,7** |
| 30 jours | France | SOLNI | 0 | 76,7 | 83,3 | 76,7 | 76,7 | Synergie | **+6,6** |
| 60 jours | UK | POLAV | 71,7 | 0 | 87,7 | 71,7 | 71,7 | Synergie | **+16** |
| 60 jours | UK | TTTTT | 41,7 | 18,3 | 93 | 41,7 | 60 | Synergie | **+33** |
| 60 jours | UK | CHEAL | 31,7 | 28,3 | 98,3 | 31,7 | 60 | Synergie | **+38,3** |
| 64 jours | France | SOLNI | 0 | 33,3 | 56,7 | 33,3 | 33,3 | Synergie | **+23,4** |
| 64 jours | France | AMARE | 28,3 | 10 | 73,3 | 28,3 | 38,3 | Synergie | **+35** |
| 64 jours | France | TTTTT | 19,3 | 19 | 42,3 | 19,3 | 38,3 | Synergie | **+4** |
| *PLAMA* = *Plantago major, POLAV* = *Polygonum avieulare, TTTTT* = *toutes plantes adventices. CHEAL* = *Chenopodium album, AMARE* = *Amaranthus retroflexus.* | | | | | | | | | |

## Revendications

1. Composition herbicide comprenant :
- un composant (A) comprenant au moins un inhibiteur de l'acétolactate synthase (ALS), ledit inhibiteur de l'ALS comprenant du flazasulfuron,
- un composant (B) comprenant au moins un acide carboxylique, ledit acide carboxylique comprenant de l'acide acétique.

2. Composition herbicide selon la revendication 1, **caractérisée en ce qu'**elle comprend en outre un milieu diluant.

3. Composition herbicide selon la revendication 2, **caractérisée** en ce ledit milieu diluant est aqueux.

4. Composition herbicide selon l'une quelconque des revendications précédentes, **caractérisée en ce que** le ratio massique entre l'acide carboxylique et l'inhibiteur de l'ALS est compris entre 1:1 et 1:24000.

5. Composition herbicide selon l'une quelconque des revendications 1 à 3, **caractérisée en ce que** le ratio massique entre l'acide acétique et le flazasulfuron est compris entre 1:200 et 1:12000, de préférence entre 1:1000 et 1:1500.

6. Composition herbicide selon l'une quelconque des revendications précédentes, **caractérisée en ce qu'**elle comprend en outre un ou plusieurs adjuvants choisis parmi : les tensioactifs, les agents mouillants, les agents dispersants, les émulsifiants, les épaississants, et les conservateurs.

7. Composition herbicide selon l'une quelconque des revendications précédentes, **caractérisée en ce que** l'inhibiteur de l'ALS est constitué de flazasulfuron, et l'acide carboxylique est constitué d'acide acétique.

8. Kit comprenant au moins deux composants séparés physiquement à utiliser comme composition herbicide, comprenant :
- un composant (A) comprenant au moins un inhibiteur de l'acétolactate synthase (ALS), ledit inhibiteur de l'ALS comprenant du flazasulfuron,
- un composant (B) comprenant au moins un acide carboxylique, ledit acide carboxylique comprenant de l'acide acétique,
les composants (A) et (B) étant destinés à un usage simultané, séparé, ou séquentiel.

9. Kit selon la revendication 8, **caractérisé en ce que** :
- le composant (A) comprend une phase huileuse comprenant l'inhibiteur de l'acétolactate synthase (ALS),
- le composant (B) comprend une solution aqueuse de l'acide carboxylique.

10. Kit selon la revendication 8 ou la revendication 9, **caractérisé en ce qu'**il comprend un ou plusieurs composants (A) et (B) séparés physiquement à utiliser comme composition herbicide selon l'une quelconque des revendications 1 à 7.

11. Procédé de préparation d'une composition herbicide selon l'une quelconque des revendications 1 à 7, comprenant les étapes suivantes :
- fourniture d'un composant (A) comprenant au moins un inhibiteur de l'acétolactate synthase (ALS), ledit inhibiteur de l'ALS comprenant du flazasulfuron, et d'un composant (B) comprenant au moins un acide carboxylique, ledit acide carboxylique comprenant de l'acide acétique,
- mélange des composants (A) et (B) pour obtenir la composition herbicide.
